# EUROPEAN PATENT APPLICATION

(11) **EP 2 149 297 A2**
(43) Date of publication of application: **03.02.2010**
(21) Application number: 09251923.0
(22) Date of filing: 03.08.2009
(51) Int. Cl.: A01K 25/00

(54) **Animal muzzle**

(30) Priority: 01.08.2008 US 184463
(71) Applicant: Topet International Co., Limited, Kwun Tong, Kowloon, Hong Kong (CN)
(72) Inventor: Wang, Yueh Yu, Kwun Tong, Kowloon (HK)
(74) Representative: Mallalieu, Catherine Louise

(57) **Abstract**

An animal muzzle (100) that is adapted to be placed over an animal's snout, particularly a domestic canine animal such as a dog. The muzzle advantageously prevents the animal from biting a human handler or another animal while permitting the animal to breathe easily and to consume water or food while the muzzle is in place. The muzzle can be fabricated from an elastic material, such as an elastomer.

## Description

### BACKGROUND OF THE INVENTION

### 1. Field of the Invention

This invention relates to the field of animal restraint devices. In particular, the invention relates to a muzzle that is adapted to inhibit biting and other undesirable behavior by an animal, particularly by a dog.

### 2. Description of Related Art

It is often desirable to restrain an animal, particularly a domesticated animal such as a dog, by limiting the animal's ability to bite other animals or to bite a human handler. For example, when an animal such as a dog is being groomed by a groomer or is being examined by a veterinarian, the dog may attempt to injure the handler by biting out of fear or anxiety. In addition, when a dog is placed in a kennel with other dogs, the dog may become agitated and attempt to bite another dog.

Muzzles that fit over the animal's snout (i.e., jaws and nose) have been used to protect persons or other animals from being bitten. Some muzzles completely prevent the animal from opening its mouth, restricting the ability of the animal to breathe. Other muzzles completely cover the nose and mouth of the animal, restricting the ability to provide food or water to the animal while the animal is wearing the muzzle.

In addition, many muzzles are fabricated from metal or leather. Metal can be uncomfortable for the animal and can also cause damage if the animal becomes agitated and strikes the muzzle against surrounding surfaces, such as furniture. Leather can wear out rapidly and cannot be easily fabricated into complex shapes.

There is a need for a muzzle that will protect people or other animals from being bitten, but that will also facilitate breathing by the restrained animal as well as facilitate the provision of food and water to the restrained animal.

### SUMMARY OF THE INVENTION

The present invention provides an animal muzzle for use with an animal, particularly for use with a canine animal such as a dog. The muzzle can be placed over the animal's snout to inhibit biting and other undesirable behavior. The muzzle can advantageously allow a handler to provide food to the dog, such as treats, while the dog is wearing the muzzle. The muzzle can also enable the dog to access and drink water while the muzzle remains in place. The muzzle can also permit the dog to breathe easily while the muzzle is in place.

Accordingly, one embodiment is directed to a muzzle for use with an animal, such as a dog. The muzzle can include a circumferential face-engaging member having a forward surface and having a rearward surface that is adapted to rest snugly against the face of the animal. A plurality of spaced-apart support ribs can extend forwardly from the forward surface of the face-engaging member. A circumferential snout-engaging member can be disposed at a distal end of the support ribs, where the snout-engaging member is adapted to fit over and circumscribe the snout of the animal. A nose bridge can extend forwardly from the snout-engaging member, where the nose bridge and the snout-engaging member form a nose aperture above the nose bridge and a mouth aperture below the nose bridge. The presence of such apertures can provide comfort to the animal by facilitating breathing by the animal, by permitting the pet owner to insert treats and permitting the animal to drink.

In one aspect, the muzzle can be fabricated from an elastic material such as an elastomer, and can be injection molded from an elastomer. In one particular aspect, the muzzle can be fabricated from a thermoplastic material, such as thermoplastic polyurethane.

To provide additional comfort for the animal, the rearward surface of the face-engaging member can include a material that is softer than the other elements of the muzzle, such as the support ribs, the snout-engaging member and the nose bridge. In one particular aspect, the face-engaging member can include an elastomer that is softer than the elastomer that forms other elements of the muzzle.

In another aspect, the muzzle can also include a strap that is adapted to secure the muzzle to the animal's head. In yet another aspect, the circumference of the nose aperture is larger than the circumference of the mouth aperture. In another aspect, the nose bridge can include two spaced-apart nose bridge members extending forwardly from the snout-engaging member. According to yet another aspect, a top portion of the circumferential face-engaging member can extend forwardly to better fit to the animal's face. In another aspect, the snout-engaging member can have a circumference that is less than the circumference of the face-engaging member.

The present invention is directed to the embodiments and aspects that are summarized above, alone or in any combination, as well as additional embodiments and aspects and combinations thereof that will be apparent from the following description of the invention.

### DESCRIPTION OF THE DRAWINGS

**Fig. 1a** illustrates a perspective view of one embodiment of an animal muzzle.

**Fig. 1b** illustrates a top view of one embodiment of an animal muzzle.

**Fig. 1c** illustrates a front view of one embodiment of an animal muzzle.

**Fig. 1d** illustrates a side view of one embodiment of an animal muzzle.

**Fig. 2** illustrates a perspective view of one embodiment of an animal muzzle.

**Fig. 3** illustrates a perspective view of one embodiment of an animal muzzle placed over the snout of a dog.

### DESCRIPTION OF THE INVENTION

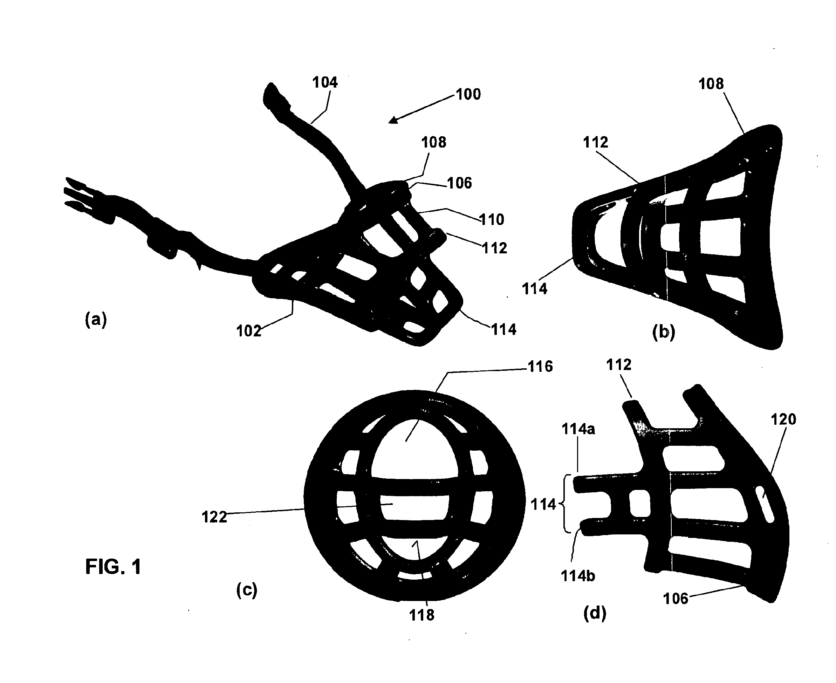

**Figs. 1a-1d** illustrate various views of a muzzle in accordance with one embodiment of the present invention. The muzzle advantageously inhibits biting and other aggressive behavior by the animal, while permitting the animal to breathe freely and to consume water or food while the muzzle is in place. In addition, the muzzle can be constructed from a material that is comfortable for the animal such as a pliable polymeric material, and can also include a relatively soft surface on a portion of the muzzle that is adapted to rest snugly against the animal's face.

Referring to **Figs. 1a-1d**, the muzzle **100** can include a circumferential face-engaging member **102** that is adapted to receive the snout of the animal therethrough when the muzzle is placed on the animal. The circumferential face-engaging member **102** can include a rearward surface **108** and a forward surface **106** opposite the rearward surface. The rearward surface **108** is adapted and shaped to rest snugly against the face of the animal. In this regard, a top portion **102a** of the face-engaging member **102** can extend forwardly from the middle portion of the face-engaging member. This will enable the muzzle **100** to fit snugly against the animal's face without substantially obstructing the animal's eyes. A lower portion **102b** of the face-engaging member **102** can also extend forwardly to better conform to the animal's face.

A plurality of spaced-apart support ribs **110** can extend in a forward direction from the forward surface **106** of the face-engaging member **102.** The support ribs **110** connect the circumferential face-engaging member **102** to a circumferential snout-engaging member **112** that is disposed at distal ends of the support ribs **110.** As illustrated in **Fig. 1****,** the muzzle **100** comprises eight support ribs **110.** However, it will be appreciated that the number of support ribs **110** is not critical, as long as the support ribs support the snout-engaging member disposed at distal ends thereof so that the position of the snout-engaging member **112** does not substantially change relative to the face-engaging member **102** as the muzzle is manipulated.

The circumferential snout-engaging member **112** is adapted to fit over and circumscribe the snout of the animal. The snout-engaging member **112** can have a circumference that is less than that circumference of the face-engaging member **102.** Thus, the face-engaging member **102,** the support ribs **110** and the snout-engaging member **112** can form a structure that generally tapers to fit over the animal's snout.

The snout-engaging member **112** is the member that is primarily responsible for restraining the animal from biting. However, the snout-engaging member **112** can be adapted to fit somewhat loosely around the animal's snout to allow the animal some limited movement of the mouth to facilitate the consumption of water and/or food by the animal and to facilitate breathing. Thus, it is preferred that the support ribs **110** comprise a rigid or semi-rigid material, such as an elastic material, such that the snout-engaging member **112** is fully supported by the support ribs **110** and the face-engaging member **102.** As with the face-engaging member, the snout-engaging member can include top and bottom portions one or both of which can extend forwardly.

A nose bridge **114** can extend generally forwardly from the snout-engaging member **112.** The nose bridge **114** further inhibits the ability of the animal to bite or nip at a person or another animal. Thus, although the snout-engaging member **112** can be adapted to permit some limited movement of the animal's mouth, the nose bridge **114** will prevent the animal from using this limited movement to bite or nip persons or other animals.

The nose bridge **114** and the snout-engaging member **112** define a nose aperture **116** above the nose bridge **114** and a mouth aperture **118** below the nose bridge **114.** The nose aperture **116** can facilitate the ability of the animal to breathe freely through its nose, with no substantial obstruction. The mouth aperture **118** can enable the animal to receive and consume food through the mouth aperture **118** and can permit the animal to drink water while the muzzle **100** is in place.

The nose bridge can include two spaced-apart nose bridge members **114a** and **114b** that extend forwardly from the snout-engaging member **112.** Alternatively, the nose bridge can include only a single nose bridge member, or more than two nose bridge members.

The muzzle **100** can be fabricated from a variety of materials. The material should be reasonably comfortable for the animal. In one embodiment, the muzzle is fabricated from a plastic material, for example thermoplastics and elastomers. The material can also be nylon (polyamide). Rubber materials, including synthetic rubbers can also be used. Particularly preferred are elastomeric materials, for example natural or synthetic rubbers, thermoplastic polyurethane (TPU) and others. In one embodiment, thermoplastic polyurethane is particularly preferred.

In one embodiment, the rearward surface **108** of the face-engaging member **102** comprises a material that is softer than the remaining elements of the muzzle. For example, some or all of the remaining elements of the muzzle can be fabricated from a first polymer and the rearward surface **108** can be fabricated from a second polymer that is softer than the first polymer. In this regard, for example, the two different elastomers can be joined by co-injection molding of two elastomers. The elastomers can be similar materials with different physical properties, such as two TPU materials having different degrees of polymerization. It will also be appreciated that the entire face-engaging member **102** could be fabricated from a softer material, rather than just a portion thereof. Further, the rearward surface of the face engaging member can comprise a non-polymeric material, such as felt or other natural or synthetic fabric material that is comfortable for the animal.

A strap **104** or similar fastening mechanism can be included to secure the muzzle **100** against the face of the animal. For example, a strap **120** can be connected to an aperture **120** in the face-engaging member.

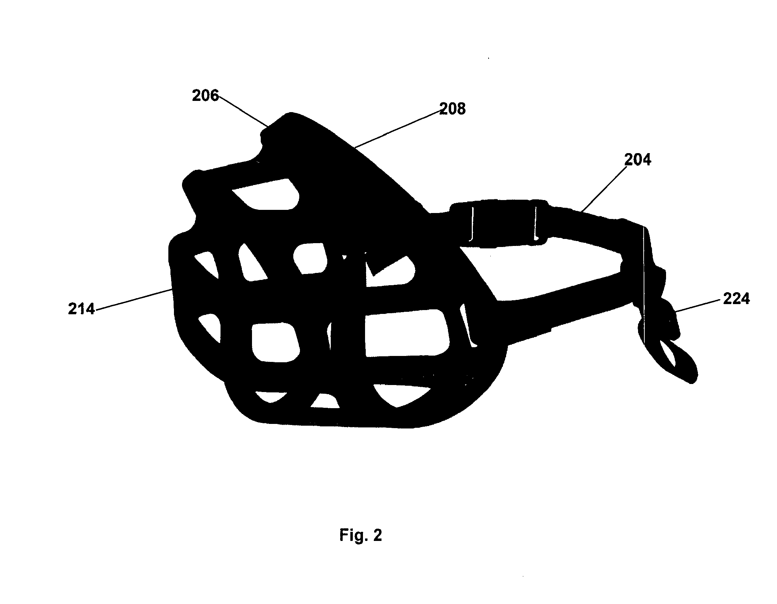

**Fig. 2** illustrates a perspective view of a muzzle in accordance with one embodiment of the present invention. The muzzle illustrated in **Fig. 2** is similar to the muzzle illustrated in **Figs. 1a-1d**, where the nose bridge **214** is slightly shorter, such as to accommodate a short nose dog breed. A strap **204** can also be included and a leash attachment **224** can be connected to the back of the strap **204.**

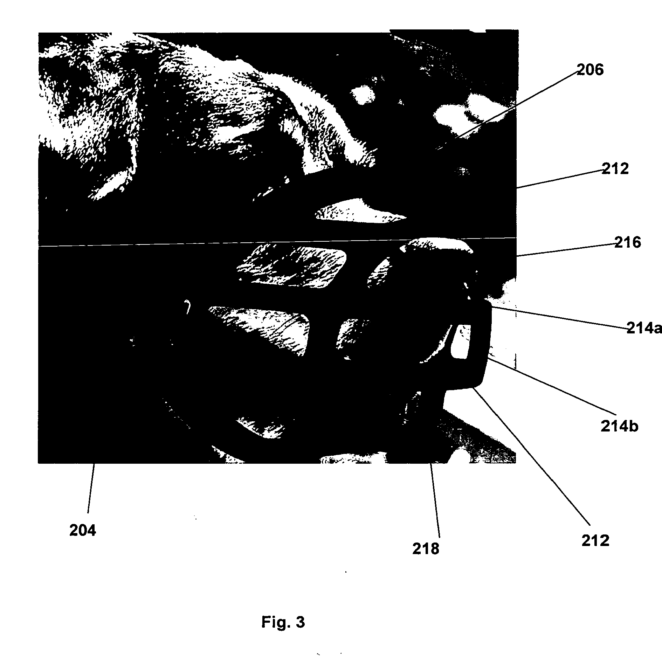

**Fig. 3** illustrates a muzzle according to one embodiment that is placed over a dog's snout. As can be seen from **Fig. 3****,** when the muzzle is secured to the dog by a strap **204,** the dog's nose can extend at least partially through the nose aperture **216** defined by the snout-engaging member **212** and the nose bridge member **214a.** Further, the dog can advantageously consume food and water through the mouth aperture **218,** which is formed by the snout-engaging member **212** and the nose bridge member **214b.**

While various embodiments of the present invention have been described in detail, it is apparent that modifications and adaptations of those embodiments will occur to those skilled in the art. However, is to be expressly understood that such modifications and adaptations are within the spirit and scope of the present invention.

## Claims

1. A muzzle for use with an animal, comprising:
a circumferential face-engaging member having a forward surface and having a rearward surface that is adapted to rest snugly against the face of the animal;
a plurality of spaced-apart support ribs extending forwardly from the forward surface of the face-engaging member;
a circumferential snout-engaging member disposed at a distal end of said support ribs, the snout-engaging member being adapted to fit over and circumscribe the snout of the animal;
a nose bridge extending forwardly from a snout-engaging member, wherein the nose bridge and the snout-engaging member form a nose aperture above the nose bridge and a mouth aperture below the nose bridge.

2. A muzzle as recited in Claim 1, wherein said muzzle is fabricated from an elastomer.

3. A muzzle as recited in Claim 1, wherein said muzzle is fabricated from a single piece of an elastomer.

4. A muzzle as recited in Claim 1, wherein said muzzle is fabricated from thermoplastic polyurethane.

5. A muzzle as recited in Claim 1, wherein said muzzle comprises an elastomer and said rearward surface of said face-engaging member comprises a material that is softer than the elastomer.

6. A muzzle as recited in Claim 1, wherein said muzzle comprises a first elastomer and said rearward surface of said face-engaging member comprises a second elastomer that is softer than the first elastomer.

7. A muzzle as recited in any of the preceding claims, further comprising a strap that is adapted to secure the muzzle to the animal's head.

8. A muzzle as recited in any of the preceding claims, wherein the circumference of said nose aperture is larger than the circumference of said mouth aperture.

9. A muzzle as recited in any of the preceding claims, wherein said nose bridge comprises two spaced-apart nose bridge members extending forwardly from a said snout-engaging member.

10. A muzzle as recited in any of the preceding claims, wherein a top portion of said circumferential face-engaging member extends forwardly.

11. A muzzle as recited in any of the preceding claims, wherein said snout-engaging member has a circumference that is less than the circumference of said face-engaging member.
